# EUROPÄISCHE PATENTSCHRIFT

(11) **EP 2 257 903 B1**
(45) Veröffentlichungstag und Bekanntmachung des Hinweises auf die Patenterteilung: **11.05.2016**
(21) Anmeldenummer: 09721110.6
(22) Anmeldetag: 25.02.2009
(51) Int. Cl.: G06F 21/00

(54) **VERFAHREN UND VORRICHTUNG ZUR ABWEHR VON ANGRIFFEN AUF SYSTEME MIT EINER PLUG&PLAY FUNKTION**
METHOD AND DEVICE FOR DEFENDING AGAINST ATTACKS TO SYSTEMS COMPRISING A PLUG&PLAY FUNCTION
PROCÉDÉ ET DISPOSITIF DE PROTECTION CONTRE LES ATTAQUES SUR DES SYSTÈMES DOTÉS D UNE FONCTION PLUG&PLAY

(30) Priorität: 11.03.2008 DE 102008013634
(43) Veröffentlichungstag der Anmeldung: 08.12.2010
(73) Patentinhaber: Wincor Nixdorf International GmbH, 33106 Paderborn (DE)
(72) Erfinder: VON DER LIPPE, Carsten, 33098 Paderborn (DE); RICHTER, Bernd, 33178 Borchen (DE)
(86) Internationale Anmeldenummer: PCT/EP2009/052233
(87) Internationale Veröffentlichungsnummer: WO 2009/112367

(56) Entgegenhaltungen:
- EP-A- 1 248 179
- EP-A- 1 708 114
- WO-A-98/55912
- WO-A-2005/120006
- WO-A-2006/055420
- DE-A1-102005 008 966
- US-A1- 2008 022 360

## Beschreibung

Die Erfindung betrifft ein Verfahren zur Erkennung von Angriffen auf mindestens eine Schnittstelle eines Rechnersystems, insbesondere einen Angriff auf Plug and Play Schnittstellen.

### Gebiet der Erfindung:

Ein typisches Angriffsszenario heutiger Tage ist die Kompromittierung eines PCs durch Verwendung von Plug & Play Mechanismen, wie zum Beispiel das Ausführen von Code durch AutoPlay Funktionen nach Anstecken eines USB-Speichersticks. Der Schutz vor derartigen Attacken wird auch zunehmend im Selbstbedienungsumfeld gefordert. Das Problem ist jedoch, dass nicht vorsorglich sämtliche Plug & Play Funktionalität gesperrt werden darf, weil dadurch auch die geforderte Funktionalität eines GAA (Geldausgabeautomat) eingeschränkt wird. Lösungen, die zum Beispiel auf USB-Treiber-Ebene die Erkennung und Verarbeitung externer Geräte nicht zulassen, wenn sie nicht in White-Lists eingetragen sind (z. B. der in PSD 5 behandelte USB Filter Treiber), sind nicht uneingeschränkt effektiv und stellen keine vollständige Lösung dar.

Die EP1708 114 A2 offenbart das Erkennen von Malware, also schadhafter Software auf einem PC, hierbei läuft ein Service, der die Software des PC überwacht.

### Überblick über die Erfindung:

Aufgabe der vorliegenden Erfindung ist die Erhöhung der Sicherheit eines Rechnersystems, insbesondere die Vermeidung von Angriffen auf Selbstbedienungsautömaten, wie Bankautomaten (Geldausgabeautomaten) und Verkaufsautomaten oder Flaschenautomaten, die in der Öffentlichkeit aufgestellt sind. Gelöst wird die Aufgabe durch ein Verfahren und eine Vorrichtung mit den Merkmalen der unabhängigen Ansprüche. Insbesondere wird die Aufgabe durch ein Verfahren zur Erkennung von Angriffen auf mindestens eine Schnittstelle eines Rechnersystems, vorzugsweise eines Selbstbedienungsautomaten, gelöst, das kontinuierlich die Schnittstelle überwacht, um Veränderungen an der Schnittstelle festzustellen. Die Überwachung kann Interrupt gesteuert sein, über Datennachrichten von Treibern erfolgen oder ein Pollorientierter Ansatz sein. Der Interrupt kann sowohl hardwareseitig, als auch softwareseitig durch einen Prozess ausgelöst werden, wenn Daten an der Schnittstelle ankommen oder von dieser gesendet werden. Auch können Datennachrichten von anderen Softwareschichten zur Verfügung gestellt werden, die dann durch Interprozesskommunikation bereitgestellt werden. In einer möglichen Ausführungsform werden modifizierte oder zusätzliche Treiber eingesetzt.

Falls Veränderungen auftreten, so wird anhand der Art der Veränderung die Wahrscheinlichkeit eines unerlaubten Angriffs auf bzw. über die Schnittstelle bestimmt. Veränderungen sind in der Regel ein ungewöhnlicher Datenverkehr. Ein ungewöhnlicher Datenverkehr ist sehr wahrscheinlich beim An- und Abmelden eines Gerätes an der Schnittstelle. Auch sind geänderte Kommunikationsprotokolle verdächtigt. Ferner kann der Inhalt der Daten ungewöhnlich sein, wenn die Art der Daten nicht zum Typ des angeschlossenen Gerätes passt. So ist ein blockorientierter Verkehr (z. B. Festplatte, USB-Stick) für ein Charakter orientiertes Gerät, wie z. B. eine Tastatur, ungewöhnlich. Meldet sich z. B. ein USB-Stick als Tastatur an einer USB-Schnittstelle an, so ist dies ungewöhnlich. Sollte die Wahrscheinlichkeit für einen Angriff, über einem definierten Schwellwert liegen, so werden Abwehrmaßnahmen eingeleitet.

Die Liste der angeschlossenen Geräte wird anhand eines Regelwerkes überwacht. Wird festgestellt, dass die Wahrscheinlichkeit eines Angriffs über einem definierten Schwellwert liegt, wird ein Logeintrag für eine Post-Mortem-Diagnose erstellt, gegebenenfalls eine Nachricht an einen Remote-Server geschickt und mit sofortiger Wirkung das System heruntergefahren, um zu verhindern, dass der Angriff eine Wirkung zeigen kann. Ferner ist auch ein unmittelbares Herunterfahren des Rechnersystems denkbar, ohne die Nutzung eines Remote-Servers. Auch können Warnnachrichten wie SMS, Email, SMTP an ein Zielsystem oder eine Zielperson gesendet werden. Weitere Möglichkeiten sind das Deaktivieren der gesamten Schnittstelle oder auch nur das Deaktivieren des neu angeschlossenen Gerätes. Ferner ist denkbar, dass sich das System in einen Sicherheitsmodus umschaltet, der keinerlei Anschluss von Geräten mehr erlaubt und nur durch einen Servicetechniker umschaltbar ist.

Im Folgenden wird eine Übersicht über die Schnittstellen gegeben, wobei die Auflistung keinen Anspruch auf Vollständigkeit hat: Serielle Schnittstelle, parallele Schnittstelle, serielle Busschnittstelle, parallele Busschnittstelle, Netzwerke, Funknetzwerkschnittstelle, optische Netzwerkschnittstelle, kabelgebundene Netzwerkschnittstelle, IEEE 1394, FireWire, IEEE 1284, LAN, WLAN, Bluetooth, PS/2, RS232.

Es versteht sich, dass auch technologische Nachfolger enthalten sind.

Ein besonderes Augenmerk ist auf Plug & Play Schnittstellen wie USB oder FireWire gelegt, die beim Anschluss eines Gerätes unmittelbar eine Aktion auf dem Rechnersystem auslösen (wie z.B. Installation eines Treibers). Wenn im Folgenden lediglich auf einen Schnittstellentyp (z. B. USB) eingegangen wird, stellt dies keinerlei Beschränkung der Erfindung dar. Vielmehr handelt es sich um den bekanntesten Schnittstellentyp mit einem sehr hohen Gefährdungspotenzial.

Bei der Berechnung der Wahrscheinlichkeit werden eines oder mehrere der folgenden Ereignisse berücksichtigt:
- Zulässigkeit der Seriennummer des an der Schnittstelle angeschlossenen Gerätes. Bei einem Filtertreiber kann das Gerät anhand von Listen zugelassen oder abgewiesen werden. Die Seriennummer kann anhand von Listen/Mustern eingeschränkt werden.
- Anzahl der Geräte, die am System und/oder einer Schnittstelle angeschlossen sind. Einzelne Geräte, Geräteklassen oder Hersteller/Produkt-Kombinationen kommen nur als beschränkte Anzahl von Geräten im System vor. Beispielsweise haben die meisten Rechnersysteme nur maximal eine MFII-Tastatur angeschlossen. Wird parallel noch eine Zweite angeschlossen, so ist dieses ein Indiz für einen Angriff. Verschiedene Multifunktionssysteme haben auch zwei Tastaturen (eine vorne für den Kunden, eine hinten für den Service). In diesem Fall ist eine dritte Tastatur kritisch. Die Anzahl der erlaubten Geräte pro Klasse ergibt sich aus der Hardwarekonfiguration und Servicestrategie des Gerätes. Diese Einstellung ist natürlich gerätetypisch einstellbar. Der gleiche Ansatz gilt für andere Eingabemedien (Kartenleser) oder Speichermedien (Festplatten).
- Ein weiterer Aspekt sind Gerätepfade, die zu berücksichtigen sind. Bei USB Geräten ist z. B. der Gerätepfad der "Weg" zum PC, d. h. der Port und die Hubs, über die ein Gerät angeschlossen wird. Geräte vom Service werden z. B. oft direkt an den PC angeschlossen, wohingegen Geräte, die keine besonderen Geschwindigkeitsanforderungen haben, bzw. eine lange Kabelverbindung erfordern, oft über Hubs angeschlossen werden. Wird nun z. B. eine Tastatur über einen Hub an einen PC angeschlossen, an dem sonst nur Drucker hängen, ist dieses eine ungewöhnliche Aktivität, die in das Scoring einfließt.
- Noch ein weiterer Aspekt sind die Zulässigkeit der Hersteller-Produktkombination des angeschlossenen Gerätes. Viele Geräte, die für den Betrieb in einem SB-System (Selbstbedienungs-System) freigegeben sind, haben eine feste Beziehung zwischen Herstellerkennung, Produktkennung und Geräteklasse. Insofern gibt die Kombinatorik Anhaltspunkte, ob ein Gerät erlaubt sein soll oder nicht. Es ist natürlich nicht ausgeschlossen, dass diese Kennungen gefälscht werden. Wird jedoch ein Fehler bei den Nachbauern bei dieser Kombination gemacht, z. B. VendorId, ProductId, Geräteklasse passen nicht zusammen, so kann dies eine Punktebewertung einfließen.

### Beispiel:

Zur Umgehung des oben angeführten Filtertreibers programmiert jemand ein Gerät, welches die gleiche VendorID und ProductID hat, wie ein in ein System eingebauter Kartenleser. Das Gerät wird also zugelassen. Allerdings ist die "gefälschte" Geräteklasse eine Tastatur (die als Geräteklasse generell zugelassen ist). Da es bekannt ist, dass von diesem Vendor keine Tastatur existiert, so ist dieses ein Indiz, dass dieses Gerät potentiell gefährlich ist.

In diesem Fall sollte auch berücksichtigt werden, dass es in einigen Fällen normal ist, wenn im laufenden Betrieb ein Gerät "verschwindet" oder wieder "auftaucht", z. B. weil ein Peripheriegerät gebootet wurde.
- ein weiterer Aspekt ist die (zeitliche) Koinzidenz vom Erkennen und Entfernen von Geräten.

Kommt es vor, dass ein neues Gerät erkannt wird, welches an einem Port hängt und kurz vorher ein anderes Gerät von diesem Port getrennt wurde, so ist dieses verdächtig, wenn das neue Gerät eine andere Geräteklasse hat, da es in diesem Fall kein einfacher Gerätetausch ist, der im Servicebereich oft vorkommt. Dieses Kriterium spielt zwar kaum eine Rolle, wenn im Rechnersystem genug freie Steckplätze vorhanden sind. Manchmal ist dafür aber erheblich relevanter, z. B. wenn bei einem Rearload (bei dem hinten genug freie Steckplätze sind) direkt hinter der Front ein Gerät entfernt und ein anderes angesteckt wird. Es ist auch denkbar, diese Überwachung Portunabhängig zu gestalten, um Sie mit anderen Kriterien zu verknüpfen. So kann es z. B. nur erlaubt sein, ein Gerät im Service-Modus auszutauschen. In diesem Fall würde eine logische Verknüpfung einfließen oder
- Ein weiterer Aspekt ist die Uhrzeit, zu der Änderungen auf der Schnittstelle detektiert werden. Die aktuelle (lokale) Uhrzeit ist ein weiteres Indiz, ob eine Plug & Play -Aktivität erlaubt ist oder nicht. Es ist z. B. selten anzunehmen, dass eine autorisierte Serviceaktivität mitten in der Nacht erfolgt. Dieses Kriterium ist aber auch stark vom Aufenthaltsort des Rechnersystems abhängig.
- In alle Aspekte kann der Betriebsmodus z. B. als Und-Verknüpfung oder als Multiplikator einfließen. Ein Selbstbedienungsautomat kennt verschiedene Betriebszustände.

Zum Beispiel "Kundenbetrieb" oder "Service-Modus". Während des "Service-Modus" ist es üblich, dass Geräte angesteckt oder entfernt werden, jedoch nicht im normalen "Kundenbetrieb". In vielen Fällen wird durch eine zusätzliche Authentifikation sichergestellt, dass der "Service-Modus" nur durch autorisiertes Personal aufgerufen werden darf.

Auf der Basis dieser Kriterien kann in einer Ausführungsform die Angriffswahrscheinlichkeit anhand eines Scoring Systems berechnet werden. Hierbei haben besonders schwerwiegende Eingriffe hohe Kennzahlen, die dann mit anderen addiert werden können oder wie im Falle des Betriebsmodus eine Multiplikation durchführen. Eine logische Verknüpfung ist natürlich auch denkbar. Beim Überschreiten eines Schwellwertes können dann entsprechende Abwehrmaßnahmen eingeleitet werden.

In Abhängigkeit des Betriebssystems ist eine mögliche Implementierung durch angepasste Treiber denkbar. Ein Ausführungsbeispiel wird weiter unten beschrieben. Hierbei wird das ganze Verfahren oder Teile durch einen Treiber für die Schnittstelle implementiert. Der Treiber kann dabei unterschiedliche Formen haben. Er kann einerseits den Standardbustreiber vollständig ersetzen. Hierbei wird der Standardbustreiber durch einen modifizierten Treiber ersetzt, der zusätzlich zu der Standardfunktionalität Aspekte des Verfahrens oder Teile davon implementiert. Auch kann ein zusätzlicher Treiber, der logisch unterhalb des Standardtreibers angeordnet ist, genutzt werden, so dass die Informationen, die an den Standardtreiber gelangen, gefiltert weitergeleitet werden. Ebenfalls kann ein zusätzlicher Treiber, der logisch oberhalb eines Standardtreibers angeordnet ist, eingesetzt werden, so dass Informationen gefiltert an das System weitergeleitet werden. Hiefür ist Voraussetzung, dass spezifische Gerätetreiber für jedes an die Schnittstelle angeschlossene Gerät verwendet werden.

In einer alternativen Ausführungsform wird Interrupt oder Poll- orientiert ein Softwareprozess gesteuert, der kontinuierlich den Verkehr auf der Schnittstelle überwacht, um einen unerlaubten Angriff zu detektieren.

Die so auf dem System installierte Monitorinstanz überwacht, welche Geräte an Plug & Play fähigen Anschlüssen angeschlossen sind.

Das oben angeführte Scoring System und die daraus abgeleiteten Aktionen sollten konfigurierbar sein, vorzugsweise auch remote von einem anderen System, zu welchem eine Netzwerkverbindung besteht.

In einer weiteren Ausprägung werden diese einzelnen Kriterien für das Scoring nicht einzeln berechnet und zusammengezählt, sondern miteinander verknüpft. Z. B. das Kriterium "(zeitliche) Koinzidenz von Erkennen und Entfernen" mit "Gerätepfad", um festzustellen, dass ein Gerät an der Vorder- oder Rückseite ersetzt wurde.

### Überblick über die Figuren

Fig. 1 zeigt ein Treiberschema für einen Standard Tastaturtreiber;
Fig. 2 zeigt ein Treiberschema, mit einem modifizierten USB-Driver Stack (USBD) Treiber.
Fig. 3 zeigt ein Treiberschema mit einem Treiber unterhalb des USBD-Treibers.
Fig. 4 zeigt ein Treiberschema mit einem Treiber oberhalb des USBD-Treibers, der als modifizierter Tastaturtreiber ausgebildet ist.

### Beschreibung der Ausführungsform:

Auch wenn im Folgenden primär auf USB Anschlüsse eingegangen wird, so können die meisten Regeln auch auf andere Anschlüsse angewendet werden.

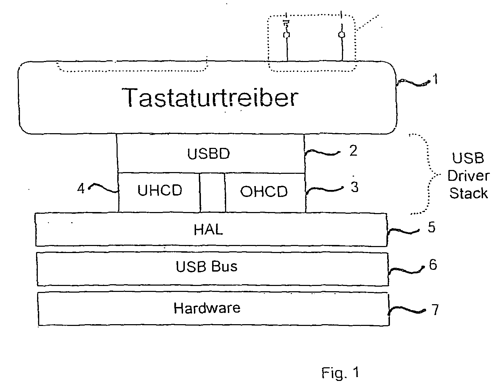

Die Figur 1 zeigt einen Schichtenaufbau eines Treiber-Modells, wie es im Windows-Betriebssystem verwendet wird. Als unterste Schicht ist die Hardware 7 anzusehen, die im vorliegenden Fall als Tastatur ausgebildet ist. Darauf ist der physikalische USB-Bus 6 ausgebildet, der aus einem Kabel und aus einem USB-Anschluss (Teil des Chipsatzes oder separate Einsteckkarten) am Rechnersystemen besteht. Darüber ist eine Software-Schicht 5 der Hardware Absraktions Layer (HAL) angeordnet, auf dem dann wiederum herstellerspezifische USB-Bustreiber angeordnet sind. Der UHCD-Treiber 4 und der OHCD-Treiber 6 stehen für unterschiedliche USB-Chip Implementierungen von unterschiedlichen Herstellern, wie Intel oder VIA. Darauf ist der allgemeine USBD-Treiber 2 des Betriebssystems angeordnet. Die genannten 3 Treiber bilden den USB-Driver- Stack 8. Da an einen einzelnen USB-Bus eine Vielzahl von Geräten angeschlossen werden kann, verbinden sich die Treiber der einzelnen Geräte mit dem USB-Treiberstack 8 und melden sich an diesem an. Der Treiberstack sendet dann die Informationen zum entsprechenden Gerätetreiber 1 je nach Identifizierung der über den Bus erlangten Daten.

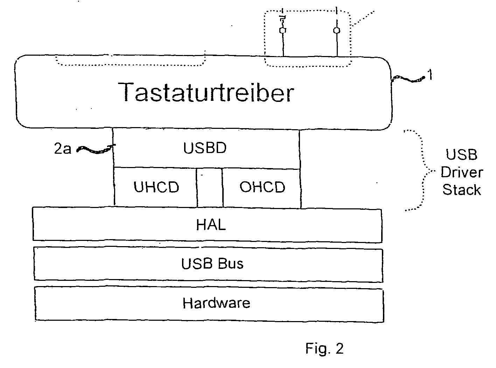

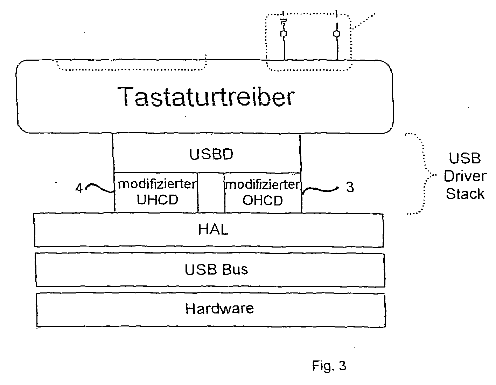

Die Figur 2 zeigt nun eine alternative Ausführungsform, bei der der USBD-Treiber 2a modifiziert wurde. Die Figur 3 zeigt eine alternative Ausführungsform, bei der die modifizierten Treiber unterhalb des USBD-Treibers liegen. Der OHCD-Treiber 3a und der UHCD-Treiber 4a sind hierbei modifiziert worden.

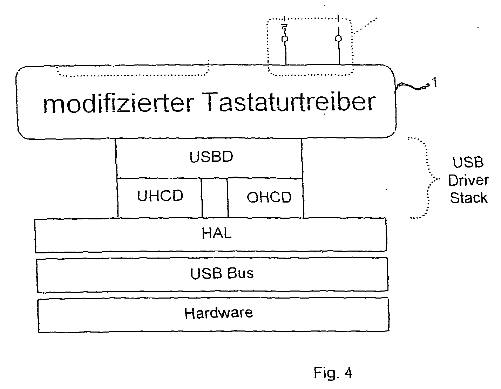

Figur 4 zeigt einen modifizierten Tastaturtreiber 1a. Bei diesem Ansatz ist zu beachten, dass für alle möglichen Geräte modifizierte Treiber zur Verfügung zu stellen sind.

### Bezugszeiehenliste

1. Tastaturtreiber
1a. modifizierter Tastaturtreiber
2. USBD Treiber (Bus-Treiber)
2a modifizierter USBD Treiber
3 OHCD-Treiber
3a modifizierter OHCD Treiber
4 UHCD-Treiber
4a modifizierter UHCD-Treiber
5 HAL (Hardware Abstraction Layer)
6 USB-Bus (universal serial bus)
7 Tastatur (Hardware)
8 USB-Driver Stack

## Patentansprüche

1. Verfahren zur Erkennung von Angriffen auf mindestens eine physikalische Schnittstelle eines Rechnersystems zur Verbindung mit einem anderen Gerät, nämlich eines Selbstbedienungsautomaten in Form eines Bankautomaten und/oder eines Flaschenautomaten und/oder eines Verkaufsautomaten, umfassend:
- Überwachung der Schnittstelle, um Veränderungen an der Schnittstelle festzustellen;
- falls Veränderungen auftreten, so wird anhand der Art der Veränderung die Wahrscheinlichkeit eines unerlaubten Angriffs auf die Schnittstelle bestimmt; wobei bei der Berechnung der Wahrscheinlichkeit ein oder mehrere der folgenden Ereignisse berücksichtigt werden: zulässige Anzahl der Geräte aus einer Geräteklasse; zeitlicher Abstand zwischen Entfernen und Anschluss eines Gerätes an die Schnittstelle; Uhrzeit, zu dem ein Gerät an die Schnittstelle angeschlossen oder entfernt wird; Modus, in dem sich das Rechnersystem bei Anschluss oder Entfernen eines Geräts an die Schnittstelle befindet, wie Kundenbetrieb oder Service-Modus;
wobei jedem Ereignis ein, vorzugsweise einstellbarer, Punktewert zugeordnet wird, und die Ereignisse summiert werden, so dass anhand der Summe überprüft werden kann, ob ein Schwellwert überschritten wurde;
- sollte die Summe über einem definierten Schwellwert liegen, so ist die Wahrscheinlichkeit eines unerlaubten Angriffs auf die Schnittstelle gegeben und es werden Abwehrmaßnahmen eingeleitet.

2. Das Verfahren nach dem vorhergehenden Anspruch, wobei die Abwehrmaßnahmen eine oder mehrere der folgenden Vorgehensweisen umfassen: Erstellen eines Log-Eintrages, automatisches Herunterfahren des Rechnersystems, Senden einer Warnnachricht an ein Zielsystem oder eine Zielperson, Deaktivieren der Schnittstelle, deaktivieren eines neu angeschlossenen Gerätes, Umschalten in einen Sicherheitsmodus.

3. Das Verfahren nach dem vorhergehenden Anspruch, wobei das Selbstbedienungssystem einen Kundenbetrieb und einen Wartungsbetrieb erlaubt, wobei ein oder mehrere Schwellwerte und/oder Wahrscheinlichkeiten in Abhängigkeit der Betriebsart unterschiedlich sind.

4. Das Verfahren nach einem oder mehreren der vorhergehenden Ansprüche, wobei die Schnittstelle eine oder mehrere der Folgenden ist:
Serielle Schnittstelle, parallele Schnittstelle, serielle Busschnittstelle, parallele Busschnittstelle, Netzwerke, Funknetzwerkschnittstelle, optische Netzwerkschnittstelle, kabelgebundene Netzwerkschnittstelle, IEEE 1394, FireWire, IEEE 1284, LAN, WLAN, Bluetooth, PS/2, RS232.
und/oder wobei die Schnittstelle eine Plug- & Play-Funktion aufweist, die eine automatische Aktion auf dem Rechnersystem auslöst.

5. Das Verfahren nach einem oder mehreren der vorhergehenden Ansprüche, wobei das Verfahren oder Teile des Verfahrens durch einen Treiber für die Schnittstelle implementiert ist, der eine oder mehrere der folgenden Eigenschaften aufweist: Ersatz des Standard Schnittstellentreibers, durch einen modifizierten Treiber, der zusätzlich zu der vorhanden Funktionalität, die das Verfahren oder Teile davon implementiert; zusätzlicher Treiber, der logisch unterhalb des Standardtreibers angeordnet ist, so dass die Informationen, die an den Standardtreiber gelangen, gefiltert weitergeleitet werden; zusätzlicher Treiber, der logisch oberhalb eines Standardtreibers angeordnet ist, so dass Informationen gefiltert an das System weitergeleitet werden.

6. Das Verfahren nach einem oder mehreren der vorhergehenden Ansprüche, wobei ein Softwareprozess kontinuierlich den Verkehr auf der Schnittstelle überwacht, um einen unerlaubten Angriff zu detektieren.

7. Ein Selbstbedienungsautomat, nämlich ein Bankautomat und/oder ein Flaschenautomat und/oder ein Verkaufsautomat, mit mindestens einer physikalischen Schnittstelle zur Verbindung mit einem Gerät, umfassend
Mittel zum Überwachen der Schnittstelle, um Veränderungen an der Schnittstelle festzustellen,
falls Veränderungen auftreten, so wird anhand der Art der Veränderung durch ein Rechenwerk die Wahrscheinlichkeit eines unerlaubten Angriffs auf die Schnittstelle bestimmt; sollte die Wahrscheinlichkeit über einem definierten Schwellwert liegen, so werden durch weitere Mittel Abwehrmaßnahmen eingeleitet,
wobei das Rechenwerk bei der Berechnung der Wahrscheinlichkeit eine oder mehrere der folgenden Ereignisse berücksichtigt wird:
zulässige Anzahl der Geräte aus einer Geräteklasse; zeitlicher Abstand zwischen Entfernen und Anschluss eines Gerätes an die Schnittstelle; Uhrzeit, zu dem ein Gerät an die Schnittstelle angeschlossen oder entfernt wird; Modus, in dem sich das Rechnersystem bei Anschluss oder Entfernen eines Geräts an die Schnittstelle befindet, wie Kundenbetrieb oder Service-Modus, wobei jedem Ereignis ein, vorzugsweise einstellbarer, Punktewert zugeordnet ist, der auf einem Speichersystem ablegbar ist, und das Rechenwerk die Ereignisse summiert, so dass anhand der Summe überprüfbar ist, ob ein Schwellwert überschritten wurde und somit die Wahrscheinlichkeit eines Angriffs vorliegt, um dann eine Abwehrmaßnahme einzuleiten.

8. Das Rechnersystem nach dem vorhergehenden Anspruch, wobei durch die weiteren Mittel Abwehrmaßnahmen eingeleitet werden, die eine oder mehrere der folgenden Vorgehensweisen umfassen: Erstellen eines Log-Eintrages auf einem Datenträger, automatisches Herunterfahren des Rechnersystems, Senden einer Warnnachricht an ein Zielsystem oder eine Zielperson über ein Netzwerk, Deaktivieren der Schnittstelle, deaktivieren eines neu angeschlossenen Gerätes, Umschalten in einen Sicherheitsmodus

9. Das Rechnersystem nach dem vorhergehenden Rechnersystemanspruch, wobei das Selbstbedienungssystem Mittel aufweist, um in einen Kundenbetrieb und in einen Wartungsbetrieb zu schalten, die jeweils ein Maß der Sicherheit betreffen, wobei ein oder mehrere Schwellwerte und/oder Wahrscheinlichkeiten in Abhängigkeit der Betriebsart unterschiedlich sind.

10. Das Rechnersystem nach einem oder mehreren der vorhergehenden Rechnersystemansprüche, wobei die Schnittstelle eine oder mehrere der Folgenden ist:
Serielle Schnittstelle, parallele Schnittstelle, serielle Busschnittstelle, parallele Busschnittstelle, Netzwerkschnittstelle, Funknetzwerkschnittstelle, optische Netzwerkschnittstelle, kabelgebundene Netzwerkschnittstelle, IEEE 1394, FireWire, IEEE 1284, LAN, WLAN, Bluetooth, PS/2, RS232.

11. Das Rechnersystem nach einem oder mehreren der vorhergehenden Rechnersystemansprüche, umfassend einen Treiber für die Schnittstelle, der eine oder mehrere der folgenden Eigenschaften aufweist: Ersatz des Standard Schnittstellentreibers, durch einen modifizierten Treiber, der zusätzlich zu der vorhanden Funktionalität, die das Verfahren oder Teile davon implementiert; zusätzlicher Treiber, der logisch unterhalb des Standardtreibers angeordnet ist, so dass die Informationen, die an den Standardtreiber gelangen, gefiltert weitergeleitet werden; zusätzlicher Treiber, der logisch oberhalb eines Standardtreibers angeordnet ist, so dass Informationen gefiltert an das System weitergeleitet werden.

12. Das Rechnersystem nach einem oder mehreren der vorhergehenden Rechnersystemansprüche, umfassend eine Einrichtung, die einen Softwareprozess umfasst, der kontinuierlich den Verkehr auf der Schnittstelle überwacht, um einen unerlaubten Angriff zu detektieren.

## Claims

1. Method for detecting attacks on at least one physical interface of a computer system for connection to another device, namely a self-service machine in the form of a cash machine and/or a bottle vending machine and/or a vending machine, comprising:
- monitoring the interface in order to determine changes to the interface;
- if changes occur, the type of change is used to determine the probability of an unauthorized attack on the interface; one or more of the following events being taken into account when calculating the probability: permissible number of devices from a device class; interval of time between the removal and connection of a device to the interface; time at which a device is connected to the interface or is removed; mode of the computer system when a device is connected to the interface or is removed, such as a customer mode or a service mode;
a point value, preferably an adjustable point value, being assigned to each event, and the events being summed, with the result that the sum can be used to check whether a threshold value has been exceeded;
- if the sum is above a defined threshold value, the probability of an unauthorized attack on the interface exists and defensive measures are initiated.

2. Method according to the preceding claim, the defensive measures comprising one or more of the following procedures: creating a log entry, automatically shutting down the computer system, transmitting a warning message to a target system or a target person, deactivating the interface, deactivating a newly connected device, changing over to a safety mode.

3. Method according to the preceding claim, the self-service system allowing a customer mode and a maintenance mode, one or more threshold values and/or probabilities being different depending on the operating mode.

4. Method according to one or more of the preceding claims, the interface being one or more of the following:
serial interface, parallel interface, serial bus interface, parallel bus interface, networks, radio network interface, optical network interface, wired network interface, IEEE 1394, FireWire, IEEE 1284, LAN, WLAN, Bluetooth, PS/2, RS232,
and/or the interface having a plug and play function which triggers an automatic action on the computer system.

5. Method according to one or more of the preceding claims, the method or parts of the method being implemented by a driver for the interface, which driver has one or more of the following properties: replacement of the standard interface driver with a modified driver which is in addition to the existing functionality which implements the method or parts of the latter; additional driver which is logically arranged below the standard driver, with the result that the information arriving at the standard driver is forwarded in a filtered manner; additional driver which is logically arranged above a standard driver, with the result that information is forwarded to the system in a filtered manner.

6. Method according to one or more of the preceding claims, a software process continuously monitoring the traffic on the interface in order to detect an unauthorized attack.

7. Self-service machine, namely a cash machine and/or a bottle vending machine and/or a vending machine, having at least one physical interface for connection to a device, comprising
means for monitoring the interface in order to determine changes to the interface,
if changes occur, the type of change is used by an arithmetic unit to determine the probability of an unauthorized attack on the interface;
if the probability is above a defined threshold value, further means initiate defensive measures, the arithmetic unit taking into account one or more of the following events when calculating the probability:
permissible number of devices from a device class; interval of time between the removal and connection of a device to the interface; time at which a device is connected to the interface or is removed; mode of the computer system when a device is connected to the interface or is removed, such as a customer mode or a service mode, a point value, preferably an adjustable point value, which can be stored on a memory system, being assigned to each event, and the arithmetic unit summing the events, with the result that the sum can be used to check whether a threshold value has been exceeded and the probability of an attack therefore exists in order to then initiate a defensive measure.

8. Computer system according to the preceding claim, the further means initiating defensive measures which comprise one or more of the following procedures: creating a log entry on a data storage medium, automatically shutting down the computer system, transmitting a warning message to a target system or a target person via a network, deactivating the interface, deactivating a newly connected device, changing over to a safety mode.

9. Computer system according to the preceding computer system claim, the self-service system having means for switching to a customer mode and to a maintenance mode, each of which relates to a measure of the safety, one or more threshold values and/or probabilities being different depending on the operating mode.

10. Computer system according to one or more of the preceding computer system claims, the interface being one or more of the following:
serial interface, parallel interface, serial bus interface, parallel bus interface, network interface, radio network interface, optical network interface, wired network interface, IEEE 1394, FireWire, IEEE 1284, LAN, WLAN, Bluetooth, PS/2, RS232.

11. Computer system according to one or more of the preceding computer system claims, comprising a driver for the interface, which driver has one or more of the following properties: replacement of the standard interface driver with a modified driver which is in addition to the existing functionality which implements the method or parts of the latter; additional driver which is logically arranged below the standard driver, with the result that the information arriving at the standard driver is forwarded in a filtered manner; additional driver which is logically arranged above a standard driver, with the result that information is forwarded to the system in a filtered manner.

12. Computer system according to one or more of the preceding computer system claims, comprising a device which comprises a software process which continuously monitors the traffic on the interface in order to detect an unauthorized attack.

## Revendications

1. Procédé de détection d'attaques sur au moins une interface physique d'un système de calcul assurant la liaison avec un autre appareil, à savoir un automate de self-service qui présente la forme d'un automate bancaire, d'un automate à bouteilles et/ou d'un automate de vente, le procédé comportant les étapes qui consistent à :
surveiller l'interface en vue de détecter des modifications de l'interface,
au cas où des modifications surviennent, déterminer à l'aide du type de modification la probabilité qu'une attaque non autorisée de l'interface a eu lieu,
un ou plusieurs des événements suivants étant pris en compte dans le calcul de la probabilité : nombre admissible d'appareils d'une classe d'appareils, durée qui s'est écoulée entre l'enlèvement et le raccordement d'un appareil à l'interface, heure à laquelle un appareil est raccordé ou enlevé de l'interface, mode dans lequel le système de calcul se trouve lors du raccordement ou de l'enlèvement d'un appareil à l'interface, par exemple service clientèle ou mode de maintenance,
une valeur ponctuelle de préférence réglable étant associée à chaque événement et les événements étant additionnés de telle sorte que la somme, permette de vérifier si une valeur de seuil a été dépassée,
au cas où la somme est située au-dessus d'une valeur de seuil définie, la probabilité d'une attaque non autorisée de l'interface est donnée et des dispositions de défense sont lancées.

2. Procédé selon la revendication précédente, dans lequel les dispositions de défense comprennent une ou plusieurs des procédures suivantes : établissement d'une entrée dans un registre, arrêt automatique du système de calcul, envoi d'un message d'avertissement à un système cible ou une personne cible, désactivation de l'interface, désactivation d'un appareil nouvellement raccordé et commutation en un mode sécurisé.

3. Procédé selon la revendication précédente, dans lequel le système de self-service permet de fonctionner en clientèle et de fonctionner en maintenance, une ou plusieurs valeurs de seuil et/ou probabilités étant différentes selon le mode de fonctionnement.

4. Procédé selon l'une ou plusieurs des revendications précédentes, dans lequel l'interface est constituée d'un ou plusieurs des éléments suivants :
interface série, interface parallèle, interface série de bus, interface parallèle de bus, réseaux, interface de réseau radio, interface de réseau optique, interface de réseau câblé, IEEE 1394, FireWire, IEEE 1284, LAN, WLAN, Bluetooth, PS/2, RS232 et/ou dans lequel l'interface présente une fonction "plug & play" qui déclenche une action automatique sur le système de calcul.

5. Procédé selon l'une ou plusieurs des revendications précédentes, dans lequel le procédé ou des parties du procédé sont mises en oeuvre par un pilote d'interface qui présente une ou plusieurs des propriétés suivantes : remplacement du pilote d'interface standard par un pilote modifié qui met en oeuvre le procédé ou des parties de ce dernier en plus de la fonctionnalité existante, pilote supplémentaire subordonné logiquement au pilote standard de telle sorte que les informations qui aboutissent sur le pilote standard soient transmises après avoir été filtrées, pilote supplémentaire hiérarchiquement supérieur au pilote standard de telle sorte que des informations soient transmises au système après avoir été filtrées.

6. Procédé selon l'une ou plusieurs des revendications précédentes, dans lequel un processus logiciel surveille en continu le trafic sur l'interface pour détecter une attaque non autorisée.

7. Automate de self-service, à savoir automate bancaire, automate à bouteilles et/ou automate de vente, présentant au moins une interface physique de liaison à un appareil, comprenant des moyens de surveillance de l'interface permettant de détecter des modifications à l'interface, et dans lequel
au cas où des modifications surviennent, à l'aide du type de modification, la probabilité d'une attaque non autorisée de l'interface est déterminée par un calculateur à l'aide du type de modification,
au cas où la probabilité est située au-dessus d'une valeur de seuil définie, des dispositions de défense sont lancées par d'autres moyens,
le calculateur de probabilité tenant compte d'un ou plusieurs des événements suivants :
nombre admissible d'appareils d'une classe d'appareils, durée qui s'est écoulée entre l'enlèvement et le raccordement d'un appareil à l'interface, heure à laquelle un appareil est raccordé ou enlevé de l'interface, mode dans lequel le système de calcul se trouve lors du raccordement ou de l'enlèvement d'un appareil à l'interface, par exemple service clientèle ou mode de maintenance,
une valeur ponctuelle de préférence réglable, qui peut être conservée sur un système de mémoire, étant associée à chaque événement et le calculateur additionnant les événements de telle sorte que la somme permette de vérifier si une valeur de seuil a été dépassée et qu'il existe ainsi une probabilité d'une attaque, pour ensuite lancer des dispositions de défense.

8. Système de calcul selon la revendication précédente, dans lequel les autres moyens lancent des dispositions de lutte qui comprennent une ou plusieurs de procédures suivantes :
établissement d'une entrée dans un registre d'un support de données, arrêt automatique du système de calcul, envoi d'un message d'avertissement à un système cible ou une personne cible, désactivation de l'interface, désactivation d'un appareil nouvellement raccordé et commutation en un mode sécurisé.

9. Système de calcul selon la revendication précédente de système de calcul, dans lequel le système de self-service présente des moyens de commutation dans un fonctionnement en clientèle et un fonctionnement en maintenance qui comprennent chacun une mesure de la sécurité, une ou plusieurs valeurs de seuil et/ou probabilités étant différentes selon le mode de fonctionnement.

10. Système de calcul selon l'une ou plusieurs des revendications précédentes de système de calcul, dans lequel l'interface est l'une des suivantes : interface série, interface parallèle, interface série de bus, interface parallèle de bus, interface réseau, interface de réseau radio, interface de réseau optique, interface de réseau câblé, IEEE 1394, FireWire, IEEE 1284, LAN, WLAN, Bluetooth, PS/2, RS232.

11. Système de calcul selon l'une ou plusieurs des revendications précédentes de système de calcul, comprenant un pilote d'interface qui présente une ou plusieurs des propriétés suivantes :
remplacement du pilote d'interface standard par un pilote modifié qui met en oeuvre le procédé ou des parties de ce dernier en plus de la fonctionnalité existante, pilote supplémentaire subordonné logiquement au pilote standard de telle sorte que les informations qui aboutissent sur le pilote standard soient transmises après avoir été filtrées, pilote supplémentaire hiérarchiquement supérieur au pilote standard de telle sorte que des informations soient transmises au système après avoir été filtrées.

12. Système de calcul selon l'une ou plusieurs des revendications précédentes de système de calcul, comprenant un dispositif qui comporte un processus logiciel qui surveille en permanence le trafic sur l'interface pour détecter une attaque non autorisée.
